# EUROPEAN PATENT APPLICATION

(11) **EP 2 026 512 A1**
(43) Date of publication of application: **18.02.2009**
(21) Application number: 07016011.4
(22) Date of filing: 14.08.2007
(51) Int. Cl.: H04L 12/56

(54) **Method and device for reserving a communication resource and communcation system comprising such device**

(71) Applicant: Nokia Siemens Networks Oy, 02610 Espoo (FI)
(72) Inventor: Hof, Axel, 81240 Olching (DE); Riedl, Johannes, Dr., 84030 Ergolging (DE)
(74) Representative: Bruglachner, Thomas E.

(57) **Abstract**

A method and a device for reserving a communication resource are provided, said method comprising the steps of (i) a first network element requests a first resource for a connection to a second network element; (ii) if the first resource requested is available, the first network element allocates the first resource; and (iii) if the first resource requested is not available, the first network element allocates a resource of a reduced size.

## Description

The invention relates to a method and to a device for reserving a communication resource and a communication system comprising such a device.

In a communication network paths are set up allocating a predefined bandwidth. In particular, such paths are utilized for connection-oriented data communication, e.g. via tunnels like VPN (Virtual Private Network).

A new path throughout the communication network is initialized to allow a data transfer from an origin or source to an addressee or destination. Furthermore, a bandwidth allocated for a particular path may have to be changed according to varying demands or traffic.

A Resource ReSerVation Protocol (RSVP) is defined according to RFC 2205. It is a network layer protocol designed to reserve resources across a network for an integrated services Internet. RFC 2205 states that RSVP does not transport application data but is rather an Internet control protocol, like ICMP, IGMP, or routing protocols.

RSVP provides receiver-initiated setup of resource reservations for multicast or unicast data flows with scaling and robustness.

RSVP can be used by either hosts or routers to request or deliver specific levels of quality of service (QoS) for application data streams or flows. RSVP defines how applications place reservations and how they can relinquish the reserved resources once they are no longer required.

RSVP operation will generally result in resources being reserved in each node along a path.

Establishment of a path via signaling can be conducted as follows: An initial request is sent to an originating node A requesting an establishment of a communication path to an addressee node B allocating a predetermined bandwidth X. Then, a CSPF (Constraint Shortest Path First) algorithm is run to determine whether a path from A to B exists allowing data transfer at a bandwidth X. In the affirmative, the path is set up. If no such path can be set up, e.g., because only a reduced bandwidth smaller than X is available, a failure message is returned to the originator of the initial request. The information relating to the bandwidth across each link via network elements is provided throughout the network by a traffic-engineering extension of the Interior Gateway Protocol (IGP).

Hence it is disadvantageously that only a subset of paths can be successfully established, whereas a significant number of paths requiring said bandwidth X will not be set up. Basically, the first request (via RSVP) allocating bandwidth between two network elements wins (first come - first serve). This significantly limits the utilization of the overall bandwidth of paths throughout the network.

The problem to be solved is to overcome the disadvantages as set forth above and to provide an approach that allows a more efficient reservation of resources of a communication environment.

This problem is solved according to the features of the independent claims. Further embodiments result from the depending claims.

In order to overcome this problem, a method for reserving a communication resource is provided, said method comprising the steps:
- a first network element requests a first resource for a connection to a second network element;
- if the first resource requested is available, the first network element allocates the first resource;
- if the first resource requested is not available, the first network element allocates a resource of a reduced size.

Hence, this concept allows to reserve the communication resource even if a first resource, e.g., a certain amount of bandwidth, is not available. In such case, a resource of a reduced sized, e.g., of a reduced amount of bandwidth, may be allocated.

It is to be noted that reserving of the communication resource may comprise and/or imply utilizing such resource reserved, in particular for data communication, e.g., via a data connection, tunnel or the like.

The resource to be reserved as mentioned may be in particular related to or be associated with a certain amount of a resource means or metric. In particular, the resource may comprise an amount of at least one of the following:
- a bandwidth;
- a number of slots, in particular time slots and/or frequency slots;
- a number of lines;
- an available communication capacity over a predetermined period of time.

Combinations of such (amounts of) resources may be utilized according to the concept presented herewith.

In an embodiment, the method comprises the step:
- If the first resource requested is not available
   - the first network element allocates a resource of a reduced size if this resource of a reduced size is larger than and/or equals a second resource,
   - otherwise, the first network element does not allocate any resource for a connection to the second network element.

Hence, a second resource, e.g., a threshold value for a minimum size of a resource to be allocated, is utilized. If this second resource cannot be met, the first network element may not allocate any resource. In other words, the first network element wants to allocate a first resource, but could get by with a second resource (e.g., a resource of a reduced size compared to the first resource). If there is less resource than the second resource requested, the allocation from the first network element's perspective cannot be successfully completed with this second network element, because there is not enough amount of whatever resource required available.

It is to be noted that the first resource and the second resource could be associated with different types. As an example, the first network element may request a certain amount of bandwidth as the first resource, but as this amount cannot be allocated, could alternatively go with a predetermined communication capacity over a given period of time.

The second resource, as well as the first resource, may be or comprise at least one of the amounts of various types as stated before.

In another embodiment, the request from the first network element to the second network element comprises values for the first resource and the second resource.

Such request may in particular comprise at least one value for the first resource and/or at least one value for the second resource. Several such valued may in particular be utilized for different types of resources.

In a further embodiment, the first network element and/or the second network element are of the following type:
- a server;
- a switch;
- a router;
- a gateway.

In a next embodiment, the first network element conveys a message to the second network element, said message comprising:
- an originating address;
- a destination address;
- a first resource requested;
- a second resource that corresponds to a resource required.

Hence, the message may comprise in particular the first resource and the second resource, e.g., an amount of bandwidth requested and an amount of bandwidth required.

It is also an embodiment that a communication channel is established in particular from the first network element via the second network element and/or at least one additional (intermediate) network element to a third network element utilizing the method as described herein.

Thus, the communication channel can be set up from the first network element via the second network element to a third network element. From each network element towards the next network element, a mechanism according to the approach described herein can be realized, i.e. a first resource can be requested, preferably together with an information relating to a second resource (minimum amount necessary for setting up a channel) as described. Each next network element can forward the resource values requested and required (e.g., the first resource and the second resource as described).

Pursuant to another embodiment, the third network element returns a third resource to the first network thereby indicating the resource (that has been successfully) reserved along the communication channel.

The third resource may be an amount of resource as described above. It may further correspond to a particular value of resource.

The resource reserved may be utilized for communication purposes, e.g., a bandwidth amount reserved can be used for communicating data at said bandwidth.

According to an embodiment, the method described is used for setting up a communication channel between the first network element and the third network element, wherein said communication channel is in particular a tunnel. Such tunnel can further be realized as a Virtual Private Network (VPN) tunnel.

The problem stated above is also solved by a device for reserving a communication resource comprising a processor unit that is arranged and/or equipped such that the method according of any of the preceding claims is executable on said processor unit.

According to an embodiment, the device is a communication device, in particular a network element.

In yet another embodiment, the device comprises at least one of the following:
- a server;
- a switch;
- a router;
- a gateway.

The problem stated supra is also solved by a communication system comprising a device as described herein.

Embodiments of the invention are shown and illustrated in the following figures:
- Fig.1: shows a flow chart and communication channels between network elements A, B, C and D, wherein requests sent from one network element to the subsequent network element establish a communication channel at a predetermined bandwidth;
- Fig.2: shows steps to be processed at a network element in order to set up a communication channel at a predetermined bandwidth.

The approach presented herein allows a network element to adjust a resource that has to be reserved for a communication channel. The resource to be adjusted can be of various kind: It can comprise, e.g., an amount of
- a bandwidth;
- a number of slots, in particular time slots and/or frequency slots;
- a number of lines;
- an available communication capacity over a predetermined period of time.

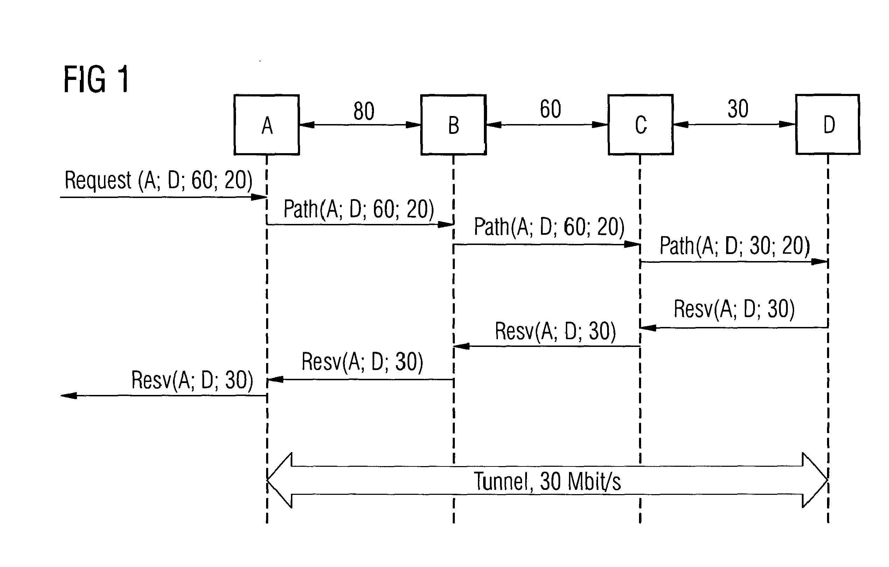

**Fig.1** shows a communication channel from a network element A to a network element D via network elements B and C. The following bandwidths (resources) are available between the respective network elements:
- A ⇔ B: 80 MBit/s
- B ⇔ C: 60 MBit/s
- C ⇔ D: 30 MBit/s

The network element A receives a request
Request (A; D; 60; 20)
comprising the parameters:
- originating address: network element A;
- destination address: network element D;
- bandwidth requested: 60 MBit/s;
- bandwidth required: at least 20 MBit/s.

The request is processed at the network element A. As the connection between the network element A and the network element B can be allocated with up to 80 MBit/s, the network element A allocates 60 MBit/s as required and forwards the request to the subsequent network element B.

The network element B allocates a bandwidth amounting to 60 MBit/s and forwards the request to its subsequent network element C (along the path to the destination network element D).

The connection between the network element C and the network element D is only capable of 30 MBit/s, whereas the initial request asked for 60 MBit/s. However, the fallback bandwidth that is still deemed acceptable according to this initial request amounts to 20 MBit/s. Hence, the network element C allocates the remaining and/or available bandwidth amounting to 30 MBit/s and changes the request's parameter "bandwidth requested" to 30 MBit/s (because that is the highest bandwidth available for the communication channel between the network element A and the network element D).

The network element D receives said request. As the network element D is the addressee in this example of Fig.1, it confirms that a communication channel between A and D is set up utilizing a continuous bandwidth of 30 MBit/s by sending an acknowledge message
Resv(A; D; 30)
to its predecessor network element C. This network element C forwards this acknowledge message to the network element B thereby de-allocating 30 MBit/s (because the connection between the network elements B and C has to provide 30 MBit/s at most). The acknowledge message is forwarded to the network element A thereby de-allocating 30 MBit/s on the connection between network elements A and B. The acknowledge message is further forwarded to its origin indicating that a tunnel between A and D has successfully been set up and is able to carry traffic at a maximum data rate of 30 MBit/s.

The example according to Fig.1 shows that a channel or tunnel between the network element A and the network element D can be set up successfully. However, if the initial request is
Request (A; D; 60; 40)
the intermediate network element C will not be able to allocate a bandwidth amounting to at least 40 MBit/s, because the connection to the subsequent network element D can only provide a bandwidth of 30 MBit/s. Hence, the network element C may return a failure message to the originator of the request indicating that a communication channel with the parameters required cannot be set up from the network element A to the network element D via the network elements B and C.

Such a failure message can be provided utilizing the Resource ReSerVation Protocol (RSVP).

According to the example shown in Fig.1 (i.e. the successful creation of the 30 MBit/s-tunnel), the Resource ReSerVation Protocol (RSVP) may be extended by providing a
RSVP_Resize
message enabling resource reservation for an already established communication channel. Preferably, additional bandwidth for such a reserved communication channel can be allocated utilizing the mechanism as described herein without the requirement of releasing the existing communication channel first.

Increasing a bandwidth of an already existing communication channel may in particular be achieved in a dynamic way, i.e., without any additional interference from an operator.

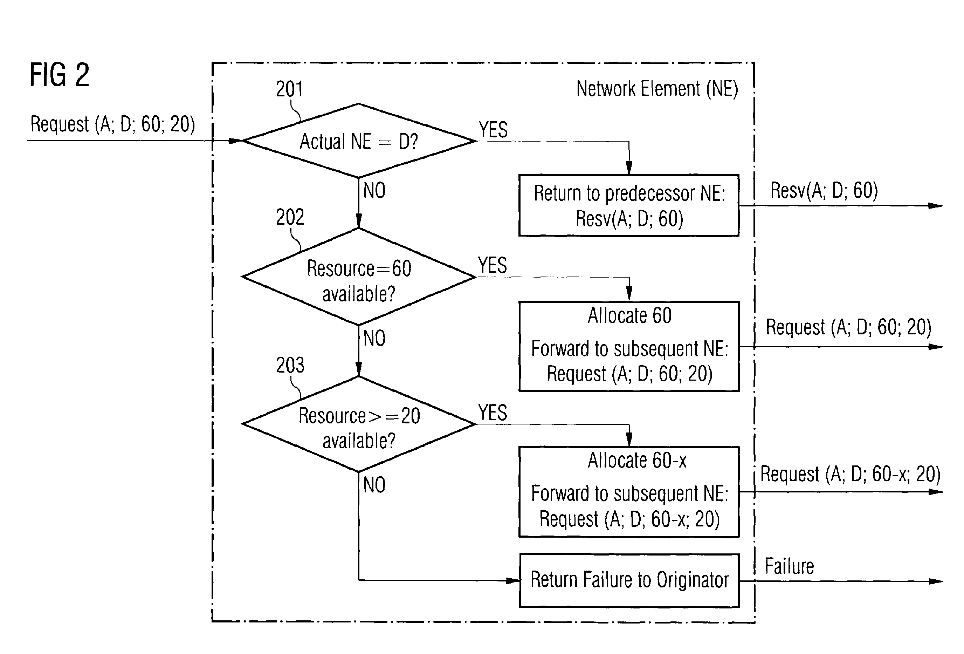

Fig.2 shows a flow chart comprising steps that can be run on a network element (NE). This network element NE can be a first network element, a second network element or a third network element (addressee) of a communication channel. The steps shown may in particular be executed to obtain a resource, in particular a bandwidth of a predefined size. As described supra, the request
Request (A; D; 60; 20)
is received at the Network Element NE. The parameters shown in said request are examples for an originating address for a tunnel, a destination address for said tunnel, a requested bandwidth (60 MBit/s) and a required bandwidth (20 MBit/s). These exemplary values are utilized in Fig.2. However, any kind of values for addresses and/or resources are applicable in a scenario as described.

The actual Network Element NE identifies in a step 201 whether it is the addressee (here: network element "D"). If this is the case, a message
Resv(A; D; 60)
is returned to its predecessor network element (according to Fig.1, the network element C) thereby indicating that a channel of 60 MBit/s bandwidth has been installed successfully.

If the actual Network Element NE is not the addressee network element D, it is checked in a step 202 whether a bandwidth amounting to 60 MBit/s is available on the next hop, i.e. the connection to the next network element. If this is the case, said bandwidth of 60 MBit/s is allocated and a request is forwarded to the subsequent network element.

If this is not the case, i.e. if there is less than the requested bandwidth of 60 MBit/s available towards the next network element, a step 203 checks whether the minimum bandwidth required (20 MBit/s) is available towards the next network element. In the affirmative, the remaining amount of bandwidth (60 MBit/s - x MBit/s) is allocated and a request
Request (A; D; 60-x; 20)
is sent to the subsequent network element.

If the bandwidth available in the step 203 is less than 20 MBit/s, a failure message is returned to the originator of the initial request thereby indicating that the communication channel with a bandwidth of at least 20 MBit/s cannot be set up between the network elements A and D.

It is to be noted that the steps according to Fig.2 may be implemented in a network element, in particular inside a switch, a router, a server, a gateway or the like. Furthermore, it may be realized as software, as hardware, as firmware or as combinations thereof. It is also possible to implement distributed software mechanisms on at least one processor unit that execute at least a portion of the steps as described herein.

An advantage of this concept is the significant reduction of number of requests for resource reservation thereby reducing the overall load throughout the network.

Another advantage is the possibility to set up a minimum bandwidth between two network elements. That may be useful from a traffic-engineering perspective, because at the time a connection is set up a useful amount of bandwidth between network elements may be unknown. The approach allows a simplified dynamic resizing of the bandwidth (during runtime of the network elements) at a later stage.

## Claims

1. A method for reserving a communication resource comprising the following steps:
- a first network element requests a first resource for a connection to a second network element;
- if the first resource requested is available, the first network element allocates the first resource;
- if the first resource requested is not available, the first network element allocates a resource of a reduced size.

2. The method according to claim 1, wherein the resource comprises in particular an amount of at least one of the following:
- a bandwidth;
- a number of slots, in particular time slots and/or frequency slots;
- a number of lines;
- an available communication capacity over a predetermined period of time.

3. The method according to any of the preceding claims, comprising the steps:
- if the first resource requested is not available
- the first network element allocates a resource of a reduced size if this resource of a reduced size is larger than and/or equals a second resource,
- otherwise, the first network element does not allocate any resource for a connection to the second network element.

4. The method according to claim 3, wherein the request from the first network element to the second network element comprises values for the first resource and the second resource.

5. The method according to any of the preceding claims,
wherein the first network element and/or the second network element are of the following type:
- a server;
- a switch;
- a router;
- a gateway.

6. The method according to any of the preceding claims,
wherein the first network element conveys a message to the second network element comprising:
- an originating address;
- a destination address;
- a first resource requested;
- a second resource that corresponds to a resource required.

7. A method for establishing a communication channel from the first network element via the second network element and/or at least one additional intermediate network element to a third network element utilizing the method according to any of the preceding claims.

8. The method according to claim 7, wherein the third network element returns a third resource to the first network element, the third resource corresponding to the resource reserved.

9. The method according to any of claims 7 or 8, wherein the method is used to set up a communication channel between the first network element and the third network element, said communication channel being in particular a tunnel.

10. The method according to any of claims 7 to 9, wherein said tunnel relates to or is associated with a Virtual Private Network tunnel.

11. A device for reserving a communication resource comprising a processor unit that is arranged such that the method according of any of the preceding claims is executable on said processor unit.

12. The device according to claim 11, wherein said device is a communication device, in particular a network element.

13. The device according to any of claims 11 or 12, wherein said device comprises at least one of the following:
- a server;
- a switch;
- a router;
- a gateway.

14. Communication system comprising the device according to any of claims 11 to 13.
